# FASCICULE DE BREVET EUROPEEN

(11) **EP 3 153 991 B1**
(45) Date de publication et mention de la délivrance du brevet: **17.04.2024**
(21) Numéro de dépôt: 16192145.7
(22) Date de dépôt: 04.10.2016
(51) Int. Cl.: G06V 30/40, G06V 10/24, G06V 10/22

(54) **PROCÉDÉ D'ANALYSE D'UN CONTENU D'AU MOINS UNE IMAGE D'UN DOCUMENT STRUCTURÉ DÉFORMÉ**
ANALYSEVERFAHREN EINES DATENINHALTS AUS MINDESTENS EINEM BILD EINES DEFORMIERTEN STRUKTURIERTEN DOKUMENTS
METHOD FOR ANALYSING A CONTENT OF AT LEAST ONE IMAGE OF A DEFORMED STRUCTURED DOCUMENT

(30) Priorité: 05.10.2015 FR 1559476
(43) Date de publication de la demande: 12.04.2017
(73) Titulaire: Idemia Identity & Security France, 92400 Courbevoie (FR)
(72) Inventeur: DURA, Jérémy, Nicolas, Laurent, 92130 ISSY LES MOULINEAUX (FR); ROSTAING, Laurent, Patrice, 92130 ISSY LES MOULINEAUX (FR); ROUH, Alain, 92130 ISSY LES MOULINEAUX (FR)
(74) Mandataire: Idemia

(56) Documents cités:
- EP-A1- 2 713 315
- WO-A2-2011/058418
- US-A1- 2014 029 857
- JIAN LIANG ET AL: "Geometric Rectification of Camera-Captured Document Images", IEEE TRANSACTIONS ON PATTERN ANALYSIS AND MACHINE INTELLIGENCE, IEEE COMPUTER SOCIETY, USA, vol. 30, no. 4, 1 avril 2008 (2008-04-01), pages 591-605, XP011224136, ISSN: 0162-8828, DOI: 10.1109/TPAMI.2007.70724

## Description

### DOMAINE TECHNIQUE GENERAL

La présente invention concerne le domaine de l'identification et de l'analyse de documents. Plus précisément, elle concerne un procédé et un dispositif d'analyse d'un contenu d'au moins une image pouvant être acquise à distance d'un document structuré éventuellement déformé tel qu'un document d'identité, un ticket de jeux, un justificatif de domicile, une facture, un formulaire, etc...

### ETAT DE LA TECHNIQUE

Des procédés, tels que celui décrit dans le brevet FR 2952218, proposent de prendre en compte des déformations dans l'image d'un document soumis par voie logicielle, afin de déterminer une image d'un document virtuel identique au document réel mais qui ne serait pas déformé. Pour cela, des procédés ont été proposés déterminant des appariements de points d'intérêt d'une grille bidimensionnelle projetée sur le document avec les points correspondants dans le document froissé et calculant une déformation du document compatible avec ces appariements.

De même, le procédé proposé dans la demande de brevet WO2011/058418 propose de corriger une transformation perspective de l'image d'un document à analyser. Pour corriger une telle transformation, sont mis en correspondance des points de l'image du document et ceux de l'image d'un modèle de document ; est ensuite calculée une homographie de l'image du document compatible avec ces appariements. Le procédé ainsi proposé permet de corriger les effets d'une projection perspective depuis un plan dans un autre plan, ce qui pourrait être considéré comme une transformation unique et globale pour l'ensemble de l'image du document considéré. Toutefois, ce procédé ne permet pas de corriger les effets liés à des déformations physiques éventuelles du document notamment les déformations ayant pour conséquence que le document n'est pas plan une fois déformé. Par exemple, le procédé proposé dans WO2011/058418 n'est pas capable de corriger une déformation du document comprenant au moins un froissage et/ou au moins un bombage et/ ou au moins un pliage du document.

Par ailleurs, de tels procédés nécessitent une puissance de calcul importante afin de calculer une déformation complexe du document compatible avec les appariements d'un nombre élevé de points d'intérêt. De tels procédés peuvent également nécessiter un système plus complexe qu'un simple dispositif de prise de vue, par exemple afin de projeter sur le document froissé des mires nécessaires au calcul de défroissage logiciel.

Il existe donc un besoin d'un procédé permettant d'identifier des signes sur un document froissé, à l'aide d'un dispositif d'imagerie simple ne comprenant ni défroissage mécanique, ni système de projection, sans être sensible aux variations lumineuses et aux déformations locales subies par le document, et sans nécessiter de calculs coûteux tels que ceux relatifs à la détermination d'un modèle global précis de déformation d'un document.

Un autre procédé d'analyse de document est décrit dans le document US2014029857.

### PRESENTATION DE L'INVENTION

La présente invention propose selon un premier aspect un procédé d'analyse d'un contenu d'au moins une image d'un document structuré susceptible d'être déformé, ledit procédé étant défini par la revendication 1.

Le contenu du document peut ainsi être lu efficacement, sans nécessiter un défroissage mécanique. Le fait de réaliser l'appairage des points d'intérêt de l'image pour chaque région d'intérêt du modèle indépendamment les unes des autres, au lieu de chercher à réaliser un appairage des points d'intérêt de l'ensemble du document d'un seul coup permet de prendre en compte les déformations locales du document à analyser à l'aide de transformations élémentaires telles que des fonctions affines ou des homographies. Cela permet ainsi de ne pas avoir à réaliser un couteux calcul des appairages et de la déformation de l'ensemble du document directement à partir de l'ensemble des points d'intérêt du document et de limiter le risque d'erreur d'appairage. Cela permet enfin d'exploiter la connaissance de la structure du modèle de document, et ses différentes régions d'intérêt, pour évaluer les déformations locales du document préalablement à l'analyse des régions à analyser du document.

Une telle étape d'acquisition peut être réalisée à distance.

Une région à analyser du modèle de document de référence final comprenant un libellé, l'étape d'analyse du contenu de la région à analyser de l'image acquise déterminée par projection de ladite région à analyser du modèle peut comprendre en outre une association du contenu analysé avec ledit libellé.

Ceci permet de caractériser automatiquement le contenu analysé en lui associant un label décrivant son contenu.

Ledit procédé selon le premier aspect peut comprendre :
- une étape de détermination d'au moins une transformation géométrique globale entre l'image acquise dudit document et au moins une image de référence associée à un modèle de document de référence initial sélectionné, et
- pour chaque région d'intérêt stockée de chacun desdits modèles de document de référence initiaux sélectionnés, une étape de détermination d'une région d'intérêt de l'image acquise correspondante, par projection dans l'image acquise de ladite région d'intérêt stockée en fonction de la transformation géométrique globale déterminée,
et dans lequel l'étape d'extraction de points d'intérêt peut comprendre l'extraction desdits points d'intérêt dans la région d'intérêt de l'image acquise déterminée.

Ceci permet de ne chercher des points d'intérêt de l'image acquise et de ne les associer à ceux du modèle que dans des zones de faible extension. De telles recherches et associations sont ainsi réalisées plus rapidement et de manière plus fiable. La prise en compte d'une transformation géométrique globale permet de limiter le risque d'erreur lors de ces étapes en cas de déformation de l'image acquise par rapport à celle du modèle, par exemple du fait d'un effet de perspective.

La lecture de la MRZ du document à analyser permet ainsi de déterminer le type du document et de présélectionner le modèle de document applicable, ou au moins un ensemble restreint de modèles de document parmi lesquels se trouve le modèle de document applicable au document à analyser.

Ladite transformation géométrique globale peut être déterminée en fonction des zones de lecture automatique (MRZ, « Machine Readable Zone ») de l'image acquise et d'un modèle de document de référence initial.

La comparaison des motifs géométriques de la MRZ permet ainsi d'en déduire une première transformation géométrique entre l'image du document à analyser et celle associée au modèle de document et de tenir compte de cette transformation pour la détermination des régions d'intérêt dans l'image du document à analyser.

Ladite étape de sélection du modèle de document de référence final peut comprendre le calcul pour chaque modèle de document de référence initial d'un score de mise en correspondance en fonction des mises en correspondance réalisées pour ledit modèle de document de référence initial, et la sélection comme modèle de document de référence final du modèle de document de référence initial présentant le score de mise en correspondance maximum.

Le modèle de document de référence utilisé pour la détermination des régions à analyser du document à analyser est ainsi le modèle correspondant le mieux au document à analyser.

A titre d'exemple, ledit document peut être parmi un document d'identité, une facture, un justificatif, un formulaire.

La transformation géométrique fine peut être estimée à l'aide d'un algorithme de pondération par distance inverse ou d'interpolation par splines.

Le procédé d'analyse selon le premier aspect peut comprendre en outre le calcul d'une image acquise corrigée à partir de l'image acquise du document déformé et de ladite transformation géométrique fine estimée.

Une image corrigée peut ainsi tout de même être fournie par le procédé, par exemple afin de l'afficher sur un document ou un écran, pour rendre visible aux yeux d'un opérateur humain le résultat de la prise en compte des déformations du document à analyser.

L'au moins une région à analyser de l'image acquise comprenant une chaîne de caractères peut être lue par un procédé de reconnaissance optique de caractères (« OCR », « optical character recognition »).

Ceci permet par exemple d'analyser les chaînes de caractères des champs personnalisés du document à analyser et de les enregistrer sous une forme exploitable par un traitement de texte.

Selon un deuxième aspect, l'invention concerne un produit programme d'ordinateur comprenant des instructions de code pour l'exécution d'un procédé d'analyse selon le premier aspect lorsque ce programme est exécuté par un processeur.

Selon un troisième aspect, l'invention concerne un dispositif d'analyse d'un contenu d'au moins une image d'un document structuré susceptible d'être déformé, ledit dispositif étant défini par la revendication 12.

Selon un quatrième aspect, l'invention concerne un système d'analyse d'un contenu d'au moins une image d'un document structuré susceptible d'être déformé comprenant :
- un dispositif de stockage stockant : des modèles de document de référence associés chacun à des régions d'intérêt et des points d'intérêt compris dans lesdites régions d'intérêt, et à au moins une région à analyser, lesdits points d'intérêt d'un modèle de document de référence donné ayant un emplacement fixe dans tout document structuré selon ledit modèle de document de référence donné,
- le dispositif d'analyse selon le troisième aspect configuré pour être relié audit dispositif de stockage.

Selon un cinquième aspect, l'invention concerne un dispositif de prise de vue à distance comprenant un système d'analyse selon le quatrième aspect.

Selon un sixième aspect, l'invention concerne un terminal mobile comprenant un dispositif de prise de vue à distance selon le cinquième aspect.

De tels produit programme d'ordinateur, dispositif et système d'analyse, dispositif de prise de vue à distance et terminal mobile présentent les mêmes avantages que ceux évoqués pour le procédé selon le premier aspect.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente un système d'analyse de contenu selon un mode de réalisation de l'invention ;
- la figure 2 illustre un exemple de document d'identité pour lequel le procédé selon l'invention est mis en oeuvre ;
- les figures 3a, 3b et 3c illustrent différents types de déformations physiques que peut subir un document pour lequel le procédé selon l'invention est mis en oeuvre ;
- la figure 4 est un diagramme schématisant une mise en oeuvre d'un procédé d'analyse selon l'invention ;
- la figure 5 illustre le résultat d'une mise en oeuvre d'une étape de mise en correspondance de points d'intérêt d'un modèle de document avec les points d'intérêt équivalents de l'image acquise appartenant à quelques régions d'intérêt particulières, du procédé selon l'invention ;

### DESCRIPTION DETAILLEE

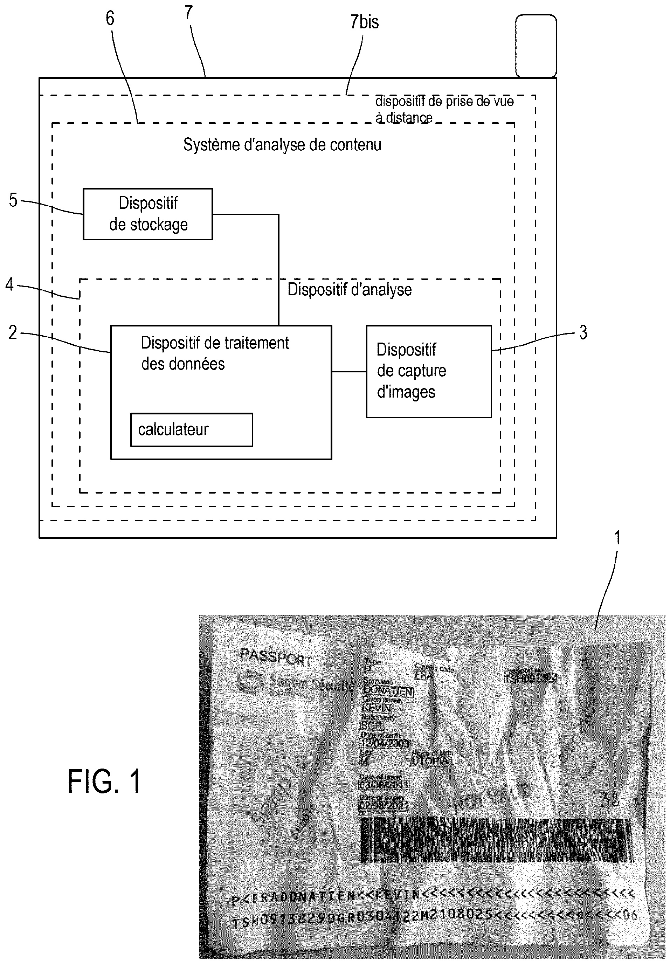

La présente invention concerne une mise en oeuvre d'un procédé d'analyse d'un contenu d'au moins une image d'un document structuré à analyser susceptible d'être déformé 1, par un dispositif de traitement de données 2 et un dispositif de capture d'image 3 compris dans un dispositif d'analyse 4 configuré pour être relié à un dispositif de stockage 5. Le dispositif d'analyse 4 et le dispositif de stockage 5 sont compris dans un système d'analyse de contenu 6 tel que représenté en figure 1. Un tel dispositif d'analyse ou un tel système d'analyse peuvent être compris dans un dispositif de prise de vue à distance 7bis pouvant lui-même être compris dans un terminal mobile 7.

On entend par document structuré un document dans lequel au moins une partie des informations d'intérêt à analyser dans le document sont inscrites dans une ou plusieurs zones prédéterminées d'emplacement connu et fixe pour tous les documents d'un même type, par opposition à un document sur papier libre. Les informations portées par le document peuvent aussi bien être sous forme d'écriture manuscrite que de caractères d'imprimerie ou encore être des éléments graphiques comme des images ou des logos. De tels documents sont par exemple des documents d'identité tels que des passeports, cartes d'identités ou permis de conduire, des formulaires, des factures, des justificatifs, des QCM d'examen ou des tickets de jeu. Pour chacun de ces types de documents au moins un modèle de document est susceptible d'être défini.

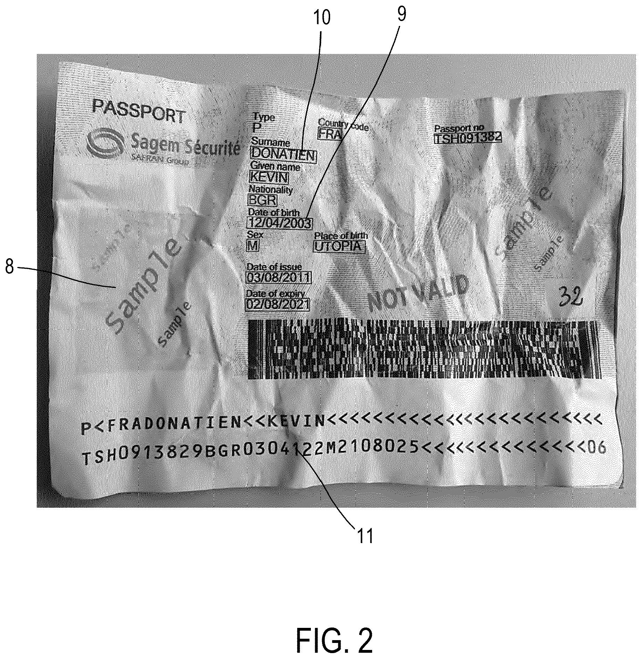

Le document à analyser susceptible d'être déformé dans lequel le procédé se propose d'analyser un contenu est supposé conforme à un de ces modèles de document prédéfinis, appelé par la suite modèle de document de référence. Un tel modèle de document de référence définit une disposition géométrique des signes le composant, c'est-à-dire la position théorique des signes, caractères ou cases le constituant lorsque le document n'est pas déformé physiquement. A un modèle de document de référence peuvent ainsi être associées des régions d'intérêt 8 représentées en figure 2. Une région d'intérêt peut être une zone du document de faible extension comprenant un élément graphique, tel qu'une image, un logo ou une certaine chaîne de caractères, générique, c'est-à-dire non personnalisé et présent dans tous les documents suivant le même modèle, et d'emplacement fixe dans tous les documents selon le modèle de document. A titre d'exemple, dans le cas d'un passeport, comme représenté en figure 2, une telle région d'intérêt peut être une zone rectangulaire comprenant un libellé tel que la chaîne de caractères « surname ». Une telle chaîne de caractères est inscrite sur tous les passeports émis selon le même modèle, à chaque fois au même emplacement.

Chaque modèle de document est également associé à des points d'intérêt 9 compris dans lesdites régions d'intérêt et ayant un emplacement fixe dans tout document structuré selon le modèle de document de référence. Les points d'intérêt d'une région d'intérêt sont des zones de très faible extension ayant des propriétés particulières qui les rendent facilement reconnaissables par rapport aux autres points dans cette région, par exemple des points à fort gradient, des angles, des fins de lignes, des points SIFT (« scale invariant feature transform »). De tels points sont ainsi porteurs d'une quantité importante d'informations (cf « Lowe D. G., 1999, Object recognition from local scale invariant features, Proceedings of the International Conférence on Computer Vision, vol. 2, p. 1150-1157»).

Dans l'exemple donné ci-dessus, les extrémités du caractère « s » peuvent ainsi être des points d'intérêt.

Dans un modèle de document, chaque région d'intérêt peut être caractérisée par une forme et une localisation dans le document, et chaque point d'intérêt d'une région d'intérêt peut être caractérisé sous la forme d'une localisation et d'un descripteur correspondant à une signature locale, comme par exemple les histogrammes des orientations pour les points SIFT.

A chaque modèle de document de référence peut également être associé au moins une région à analyser 10 contenant une information à analyser non générique, c'est-à-dire potentiellement différente pour chaque document à analyser. Le contenu d'une telle région à analyser peut être un caractère tel qu'un caractère alphanumérique comme une lettre, un chiffre ou un caractère spécial tel qu'un tiret, ou bien une chaîne de tels caractères, ou bien encore un élément graphique comme un motif spécifique de l'organisme/pays émetteur du document. De telles régions à analyser peuvent être les zones du document comprenant des champs personnalisés par exemple le champ « nom » d'un passeport, une photo du possesseur du document ou un élément de sécurité. A titre d'exemple dans le cas du passeport représenté en figure 2, les régions à analyser sont les régions encadrées comprenant les chaînes de caractères « DONATIEN », « UTOPIA », etc...

Dans un modèle de document, chaque région à analyser peut être caractérisée par une forme et une localisation dans le document ainsi qu'un libellé caractérisant le type d'information contenu dans la région à analyser.

De tels documents structurés ainsi que les modèles de document de référence associés peuvent également comprendre une zone de lecture automatique (ZLA) 11 (MRZ, « Machine Readable Zone »). Une telle zone de lecture automatique (ZLA) apparait par exemple dans la zone inférieure du passeport illustré sur la figure 2. Une telle zone de lecture contient notamment des informations relatives au nom, numéro de passeport, nationalité, date de naissance, sexe, date d'expiration du passeport, numéro d'identité personnel, pays émetteur du passeport. Elle peut être lue par un procédé de reconnaissance optique de caractères (« OCR », « optical character recognition »). Une telle zone de lecture automatique (ZLA) d'un document structuré permet d'identifier un nombre réduit de modèles de document de référence potentiellement associés au document structuré parmi les modèles de document de référence stockés.

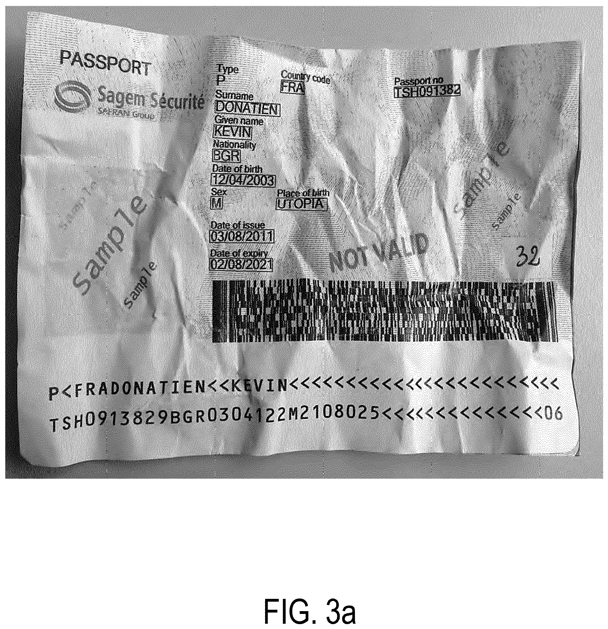

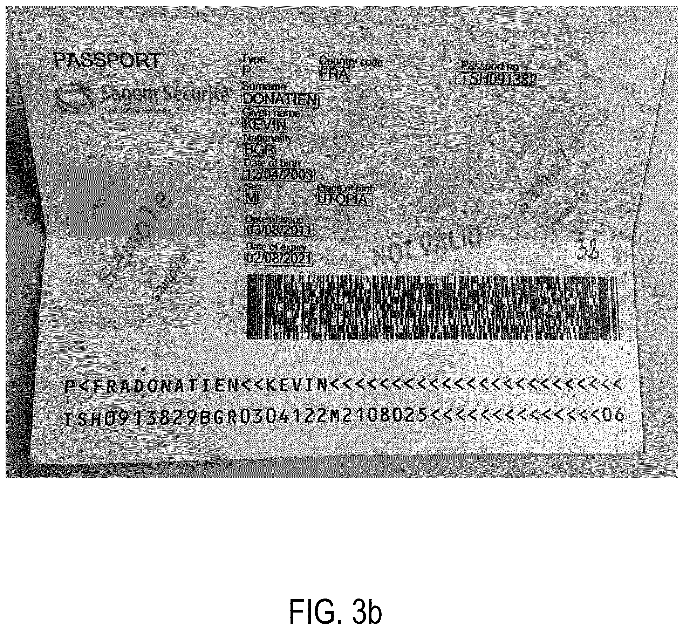

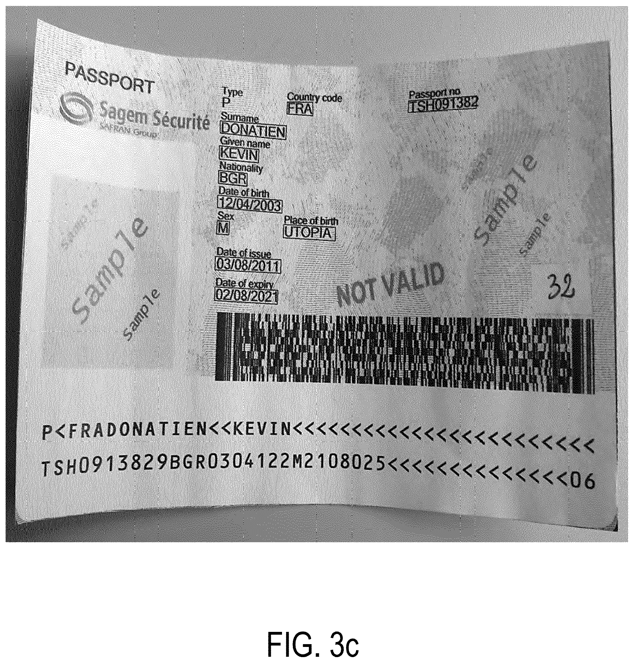

Un tel document peut présenter des déformations physiques de plusieurs types comme illustrées en figures 3a à 3c résultant de la manipulation du document par l'utilisateur. De telles déformations peuvent par exemple être des froissements comme illustrées en figure 3a, des pliures comme illustrées en figure 3b ou des courbures comme illustrées en figure 3c.

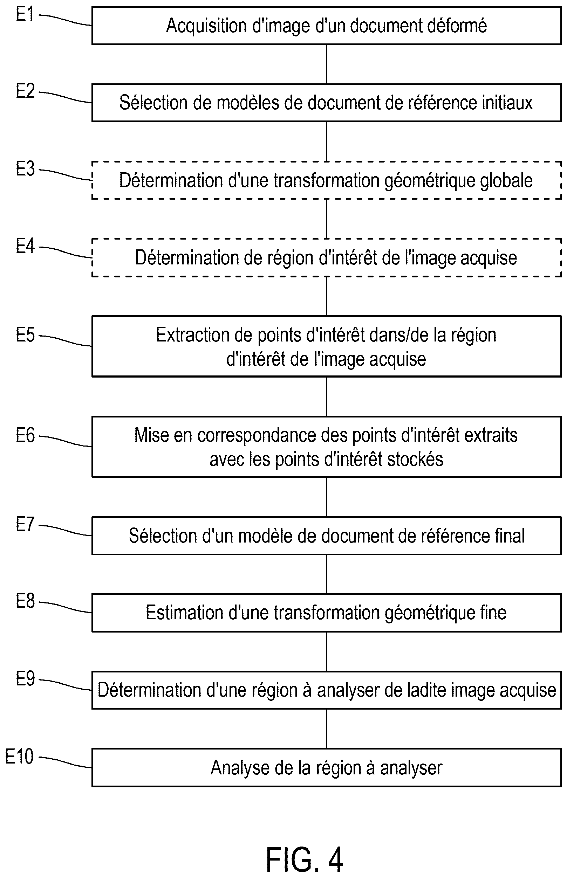

La figure 1 illustre un dispositif d'analyse configuré pour analyser le contenu d'au moins une image d'un tel document structuré en mettant en oeuvre un procédé d'analyse décrit en référence à la figure 4.

Ce procédé propose d'appairer, pour chaque région d'intérêt d'au moins un modèle de document, des points d'intérêt avec des points correspondants dans le document à analyser et de comparer le positionnement des points appariés afin de déterminer une déformation du document, puis d'utiliser la connaissance de cette déformation pour déterminer la position dans le document à analyser de régions à analyser correspondant à celles du modèle de document.

En traitant les zones d'intérêt du document de manière indépendante les unes des autres, des déformations locales du document peuvent être déterminées, modélisant fidèlement la déformation complexe du document, sans pour autant nécessiter autant de puissance de calcul que lors de la détermination d'une déformation globale du document à l'aide d'une transformation complexe prenant en compte l'ensemble des points d'intérêt du document.

Le procédé permet ainsi d'analyser correctement un document froissé sans nécessiter de défroissage, à partir d'un modèle de document de référence préenregistré correspondant au document froissé.

Ce procédé est mis en oeuvre par le dispositif d'analyse 4 comprenant le dispositif de capture d'image 3 et le dispositif de traitement de données 2.

Un tel dispositif de capture d'image 3 est configuré pour acquérir au moins une image numérique dudit document à analyser lors d'une étape d'acquisition E1. Un tel dispositif de capture d'image peut comprendre un appareil de prise d'image à distance tel qu'un appareil photo, une caméra ou bien un scanner. Ce dispositif de capture d'image est configuré pour acquérir une image numérique du document, par exemple sous la forme d'une matrice de pixels, reproduisant les éventuelles déformations géométriques physiques du document. Une telle image peut également comprendre des déformations géométriques produites par la projection perspective réalisée par le dispositif de capture d'image. De telles déformations sont d'autant plus marquées que la prise de vue est réalisée à distance et que la pose du document par rapport au dispositif s'éloigne d'une position fronto-parallèle. Une telle acquisition nécessite uniquement de présenter le document à traiter dans le champ de prise de vue du dispositif de capture d'image, et ne nécessite pas que le document soit mis en contact avec le dispositif d'analyse, par exemple en étant inséré dans le dispositif ou posé à plat sur une surface d'imagerie.

Un tel dispositif de traitement de données 2 peut comprendre un calculateur et une interface de communication. Un tel calculateur embarqué peut consister en un processeur ou microprocesseur, de type x-86 ou RISC ou ARM par exemple, un contrôleur ou microcontrôleur, un DSP, un circuit intégré tel qu'un ASIC ou programmable tel qu'un FPGA, une combinaison de tels éléments ou tout autre combinaison de composants permettant de mettre en oeuvre les étapes de calcul du procédé décrit ci-dessous. Une telle interface de communication peut être n'importe quelle interface, analogique ou numérique, permettant au calculateur d'échanger des informations avec les autres éléments du système d'analyse 6. Une telle interface peut par exemple être une interface série RS232, une interface USB, Firewire, HDMI ou une interface réseau filaire de type Ethernet ou sans fil de type Wifi ou encore tout type d'interface.

Le dispositif de traitement de données 2 est configuré pour être relié par le biais de cette interface de communication avec le dispositif de stockage 5 et le dispositif de capture d'images 3. Un tel dispositif de stockage 5 peut comprendre une mémoire non volatile réinscriptible (mémoire flash ou mémoire EEPROM) pouvant stocker une base de données. Le dispositif de stockage stocke des modèles de document de référence comme ceux décrits ci-dessus, associés chacun à des régions d'intérêt et des points d'intérêt compris dans lesdites régions d'intérêt, et à au moins une région à analyser, lesdits points d'intérêt d'un modèle de document de référence donné ayant un emplacement fixe dans tout document structuré selon ledit modèle de document de référence donné. Chaque modèle de document de référence est en outre associé à une image de référence d'un document selon ledit modèle. Alternativement, le dispositif de stockage peut consister en la mémoire RAM du dispositif de traitement de données 2.

Avant de pouvoir comparer l'image acquise du document à analyser avec un modèle de document de référence pour identifier les déformations subies par le document à analyser et l'emplacement des régions à analyser dans ce document, il est nécessaire d'identifier, parmi les modèles de document stockés dans le dispositif de stockage, le modèle de document correspondant au document à analyser.

Pour cela le calculateur du dispositif de traitement de données peut être configuré pour mettre en oeuvre une étape de sélection E2 d'au moins un modèle de document de référence initial parmi les modèles de document de référence stockés dans le dispositif de stockage. Si le document à analyser contient une ou plusieurs informations identifiant sans équivoque le modèle de document applicable, l'étape de sélection E2 sélectionne un seul modèle de document correspondant exactement au document à analyser. A défaut, cette étape permet de sélectionner un ensemble de modèles de référence proches les uns des autres et parmi lesquels se trouve le modèle de référence correspondant exactement au document à analyser.

L'au moins un modèle de document de référence initial est sélectionné parmi les modèles de document de référence stockés dans le dispositif de stockage en fonction de la zone de lecture automatique (ZLA) (MRZ, « Machine Readable Zone ») de l'image acquise. Pour ce faire la zone de lecture automatique (ZLA) peut être lue par un procédé de reconnaissance optique de caractères (« OCR », « optical character recognition »). Puis en fonction des informations lues, par exemple en fonction du pays émetteur du document ou du numéro du document compris dans la zone de lecture automatique (ZLA), un ou plusieurs modèles de document de référence initiaux sont sélectionnés parmi les modèles de document de référence stockés.

Dans le cas où ni la lecture de la ZLA, ni la comparaison de points d'intérêt ne permet d'identifier un ou plusieurs modèles de documents de référence correspondant au document structuré, cette étape peut ne conduire à la sélection d'aucun modèle de document de référence initial, ou bien au contraire à la sélection de tous les modèles de documents de référence stockés comme modèles de document de référence initiaux.

Le calculateur du dispositif de traitement de données est ensuite configuré pour mettre en oeuvre pour chaque région d'intérêt stockée de chacun desdits au moins un modèle de document de référence initial sélectionné :
- une étape d'extraction E5 de points d'intérêt dans l'image acquise déterminée,
- une étape de mise en correspondance E6 des points d'intérêt extraits avec les points d'intérêt stockés de ladite région d'intérêt du modèle de document de référence initial.

Pour chaque modèle de document de référence initial sélectionné, des points d'intérêt sont ainsi extraits de l'ensemble de l'image acquise ; puis pour chaque région d'intérêt les points d'intérêt extraits sont appariés avec ceux du modèle.

Une telle mise en correspondance est réalisée en fonction de la similitude des descripteurs des points d'intérêt. Une telle mise en correspondance est également fonction de leur localisation afin de ne pas appairer deux points d'intérêt présentant des descripteurs très semblables mais situés à des localisations dont l'éloignement est par exemple incompatible avec les mises en correspondance des autres points d'intérêt de la même région d'intérêt.

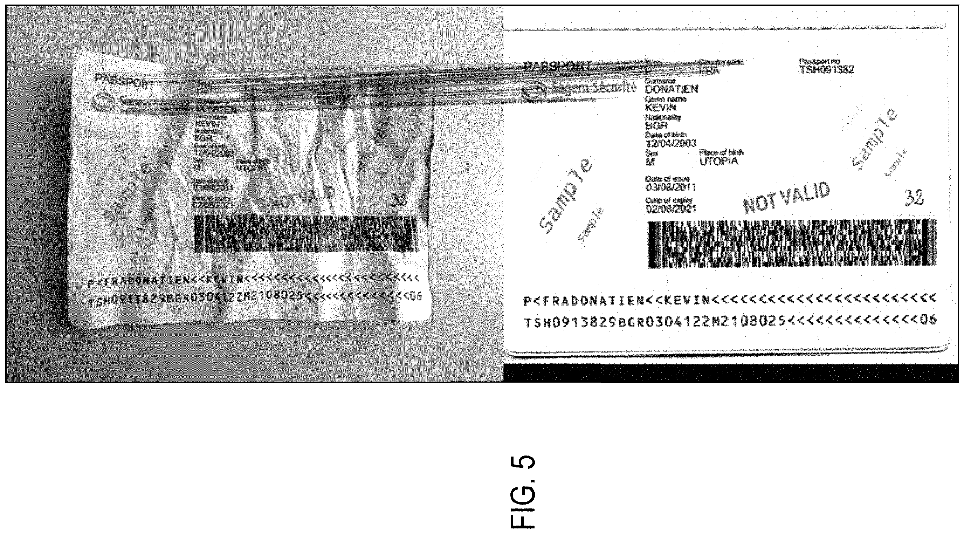

Une telle mise en correspondance est illustrée en figure 5 dans laquelle un grand nombre de points des lettres du mot passeport, constituant des points d'intérêt du modèle de document, sont mis en correspondance avec les points équivalents de l'image acquise.

Lors de cette étape, une transformation géométrique locale, faisant correspondre les points d'intérêt du modèle de document de référence et ceux de l'image acquise mis en correspondance, peut être déterminée pour chaque région d'intérêt du modèle de document de référence. Une telle transformation peut par exemple être obtenue à partir d' :
- un modèle affine déterminant une application affine reliant les points d'intérêt de l'image acquise et les points d'intérêt du modèle de document de référence, telle qu'une translation, une rotation ou une homothétie ou une mise à l'échelle, ou une combinaison de ces transformations. Un tel modèle permet de préserver les alignements de points et les ratios de distances entre des points du document,
- un modèle homographique déterminant une application homographique reliant les points d'intérêt de l'image acquise et les points d'intérêt du modèle de document de référence. Un tel modèle permet de faire correspondre un plan d'une surface plane vu par une caméra avec le plan de la même surface dans une autre image,
- un modèle d'interpolation déterminé à l'aide d'un algorithme de pondération par distance inverse, tel que proposé dans le document « Franke R., 1982, Scattered data interpolation : tests of some methods, mathematical of computation, 38(157), 181-200 », et/ou d'interpolation par splines.

Une telle transformation, définie pour une région d'intérêt donnée, permet ainsi de caractériser la déformation subie localement par le document structuré à analyser au niveau de cette région d'intérêt.

La mise en correspondance E6 des points d'intérêt pour chaque région d'intérêt représente des calculs beaucoup moins lourds que qu'une mise en correspondance de l'ensemble des points d'intérêt d'un document et ce pour deux raisons. Premièrement, l'utilisation de points d'intérêts dans des régions d'intérêt limite l'extension de la zone où sont cherchés des points d'intérêts, et donc en réduit d'autant le nombre. Deuxièmement, la mise en correspondance par région limite drastiquement le nombre de combinaisons de mise en correspondance possibles. Ces deux effets permettent d'une part des calculs beaucoup moins lourds, mais également de produire des résultats plus fiables et plus précis en limitant la probabilité de faux appairage qui intervient dans la mise en correspondance et l'estimation de la transformation géométrique : il y a moins de points d'intérêts faux, par exemple liés à des salissures sur le document, et qui seraient en dehors des régions d'intérêt, et il y a également moins de risque de mise en correspondance incorrecte de point d'intérêts.

La mise en correspondance E6 peut être mise en oeuvre au moyen d'un des méthodes décrites dans les documents suivants :
- « Random sample consensus : a paradigm for model fitting with applications to image analysis and automated Cartography », 1981, par M. A. Fischler et R. C. Bolles;
- "Multiple View Geometry in Computer Vision", 2000, par R. Hartley et A. Zisserman;
- "A robust Technique for Matching Two Uncalibrated Images Through the Recovery of the Unknown Epipolar Geometry", 1995, par Z. Zhang, R. Deriche, O ; Faugeras et Q. T. Luong.

Puis, le calculateur du dispositif de traitement de données peut mettre en oeuvre la sélection E7 d'un modèle de document de référence final parmi lesdits modèles de document de référence initiaux sélectionnés en fonction desdites mises en correspondance.

Pour ce faire, un calcul peut être mis en oeuvre pour chaque modèle de document de référence initial d'un score de mise en correspondance en fonction des mises en correspondance réalisées pour ledit modèle de document de référence initial, et le modèle de document de référence initial présentant le score de mise en correspondance maximum peut être sélectionné comme modèle de document de référence final. A titre d'exemple, un tel score peut être calculé en fonction du nombre de points d'intérêt mis en correspondance ou encore en fonction du degré de similitude de descripteurs des points d'intérêt. Le choix du modèle de référence à prendre en compte pour les étapes ultérieures du procédé est ainsi réalisé parmi les modèles de référence de document initiaux précédemment sélectionnés de façon à sélectionner le modèle de référence dont le document à analyser est le plus proche.

Lorsqu'un seul modèle de référence de document a été sélectionné lors de l'étape de sélection E2, cette étape de sélection d'un modèle de document de référence final peut servir à valider la sélection initiale du modèle en vérifiant que le nombre de points d'intérêt mis en correspondance est suffisant, par exemple supérieur à un seuil prédéterminé. Il est ainsi possible de vérifier que le document à analyser n'est pas éloigné du modèle sélectionné et que la sélection initiale n'était pas erronée.

Dans le cas où aucun modèle de document de référence n'a été considéré comme particulièrement pertinent lors de l'étape de sélection E2, cette étape permet de déterminer le modèle de document de référence le plus proche du document structuré, et de choisir de le considérer comme valide ou non pour une analyse du contenu du document structuré.

Les mises en correspondance, déterminées pour chaque région d'intérêt du modèle de document de référence final, sont représentatives pour chacune de ces régions d'intérêt des déformations locales du document à analyser par rapport au modèle de document de référence final.

Le calculateur du dispositif de traitement de données peut alors estimer E8 une transformation géométrique dite fine entre l'image acquise et l'image de référence associée au modèle de référence final prenant en compte les déformations locales du document à partir desdites mises en correspondance effectuées lors de l'étape E6 au niveau des zones d'intérêt prises une à une, et, le cas échéant, des transformation résultant de l'étape E6.

Une telle transformation géométrique fine peut être estimée comme un modèle global complexe à partir des points mis en correspondance et/ou des transformations locales simples calculées pour chaque région d'intérêt lors de l'étape 6. A titre d'exemple une telle transformation fine peut être déterminée à l'aide d'un algorithme de pondération par distance inverse ou d'interpolation par splines.

En d'autres termes, la transformation géométrique dite fine estimée au cours de l'étape E8 est ainsi obtenue en exploitant : (i) tous ou une partie des points d'intérêt mis en correspondance au cours de l'étape E6 ; et (ii) éventuellement leurs transformations géométriques associées, zone d'intérêt par zone d'intérêt.

L'utilisation de tels modèles de déformation permet de ne pas limiter le procédé à la prise en compte de déformations simples telles que des déformations dues à la perspective induite par un mauvais positionnement du document traité, par exemple dans un plan incliné par rapport au plan de prise d'image, comme cela est le cas du procédé décrit dans le document WO2011/058418. Ainsi, le procédé décrit permet de prendre en compte à la fois de telles déformations simples mais également des déformations bien plus variées et bien plus complexes telles que des déformations locales dues au froissage du document.

Une telle transformation géométrique fine peut être déterminée en mettant en oeuvre successivement au moins deux algorithmes et/ou applications parmi les exemples cités ci-dessus. Différents algorithmes peuvent ainsi être testés afin de déterminer le plus adapté ou la combinaison la plus adaptée pour décrire les déformations locales du document. Différents algorithmes peuvent être adaptés et enregistrés de sorte à ce qu'au moins un algorithme corresponde à chaque type de déformation tel que le froissement, le pliage, la courbure etc...

Puis le calculateur du dispositif de traitement de données détermine E9 au moins une région à analyser de ladite image acquise par projection de l'au moins une région à analyser du modèle de document de référence final dans ladite image acquise en fonction de ladite transformation géométrique fine estimée.

L'emplacement dans l'image acquise de la ou des régions à analyser dans le document à analyser peut ainsi être déterminé en prenant en compte les déformations locales du document, pour le coût de calcul modéré d'une projection.

Enfin, le dispositif d'analyse analyse E10 le contenu de ladite au moins une région à analyser de l'image acquise déterminée. La ou les régions à analyser de l'image acquise peuvent ainsi être lue par un procédé de reconnaissance optique de caractères (« OCR », « optical character recognition »). Une telle lecture est particulièrement adaptée si les régions à analyser comprennent des chaînes de caractères. Afin d'analyser des images comprises dans ces régions à analyser, les régions à analyser de l'image acquise peuvent être traitées par un procédé d'analyse adapté au type d'image considéré, tel qu'un procédé de reconnaissance faciale dans le cas d'un portrait.

Lorsque les régions à analyser du modèle de document de référence final sont associées à un libellé, l'étape d'analyse du contenu d'une région à analyser de l'image acquise déterminée par projection d'une région à analyser du modèle peut comprendre une association du contenu analysé avec le libellé associé à cette région à analyser du modèle.

Ainsi l'analyse du document à analyser ne nécessite pas de corriger ses déformations locales dans l'image acquise. Elle est réalisée directement dans l'image acquise en utilisant la transformation géométrique fine estimée à l'étape E8. Ceci permet un gain en temps et en puissance de calcul, et évite les erreurs commises lors d'une correction permettant ainsi en gain en précision d'analyse.

Dans un mode de réalisation, le calculateur du dispositif de traitement de données est en outre configuré pour mettre en oeuvre une étape optionnelle E3 de détermination d'une transformation géométrique globale entre l'image acquise dudit document 1 et au moins une image de référence associée à un modèle de document de référence initial.

Une telle transformation étant une transformation géométrique globale prendra alors mal en compte les déformations locales du document et ne permettra pas à elle seule une détermination efficace de la position dans l'image acquise des régions à analyser à partir de celles d'un modèle de référence. Elle ne se substitue donc pas à la transformation géométrique fine estimée lors de l'étape d'estimation E8. Par contre une telle transformation globale permet de prendre en compte la pose du document acquis à distance et peut donc être utilisée pour améliorer l'appariement des points d'intérêt d'une région d'intérêt d'un modèle de document et ceux de l'image acquise, comme décrit ci-dessous. Par ailleurs une telle transformation reste peu coûteuse à calculer du fait de sa simplicité.

Dans un premier mode de mise en oeuvre, une telle étape est mise en oeuvre avant toute mise en correspondance des points d'intérêt de l'image acquise et d'un modèle de référence. Une telle détermination d'une transformation globale peut alors être mise en oeuvre par comparaison d'éléments géométriques de l'image acquise avec des éléments équivalents d'au moins une image de référence d'un modèle de document. Lorsque plusieurs modèles de documents de référence initiaux ont été sélectionnés lors de l'étape de sélection E2, une telle transformation peut être déterminée une seule fois par rapport à un seul modèle de référence parmi les modèles de documents de référence initiaux sélectionnés. Alternativement une telle détermination peut être mise en oeuvre indépendamment par rapport à chaque modèle de référence initial sélectionné.

Dans une première variante de mise en oeuvre, la transformation géométrique globale du document est déterminée en fonction des zones de lecture machine (ZLA) de l'image acquise et de l'image de référence du ou des modèles de document de référence initiaux. Ceci permet de limiter le temps de calcul nécessaire. Pour ce faire les zones de lecture machine de l'image acquise et de l'image de référence du modèle de document de référence initial peuvent être lues par un procédé de reconnaissance optique de formes géométriques, puis une transformation géométrique globale entre l'image acquise dudit document et l'image de référence associée au modèle de document de référence initial peut être déterminée.

Dans une deuxième variante de mise en oeuvre, en l'absence de ZLA, une telle détermination d'une transformation globale peut être mise en oeuvre par comparaison d'éléments géométriques de l'image acquise et d'une image de référence d'au moins un modèle de document tels que des lignes d'un logo ou d'un emblème.

A titre d'exemple, une telle transformation géométrique globale peut être déterminée à partir d' :
- un modèle affine déterminant une application affine reliant les positions des caractères de la zone de lecture automatique (ZLA) de l'image acquise et les positions des caractères de la zone de lecture automatique (ZLA) de l'image de référence du modèle de document de référence intial, telle qu'une translation, une rotation, une homothétie, une mise à l'échelle, ou une combinaison de ces transformations. Un tel modèle permet de préserver les alignements de points et les ratios de distances entre des points du document,
- un modèle homographique déterminant une application homographique reliant les positions des caractères de la zone de lecture automatique (ZLA) de l'image acquise et les positions des caractères de la zone de lecture automatique (ZLA) de l'image de référence du modèle de document de référence initial. Un tel modèle permet de faire correspondre un plan d'une surface plane vu par une caméra avec le plan de la même surface dans une autre image,
- un modèle d'interpolation déterminé à l'aide d'un algorithme de pondération par distance inverse et/ou d'interpolation par splines.

Dans un deuxième mode de mise en oeuvre, le procédé d'analyse est réalisé de manière itérative. Une transformation géométrique globale tel que décrite ci-dessus peut alors être déterminée ou non lors d'une première itération du procédé puis une telle transformation géométrique globale peut être déterminée lors d'une autre itération à partir de la transformation géométrique fine du document obtenue à l'étape d'estimation E8 lors d'une itération précédente.

Dans ces deux modes de mise en oeuvre, le calculateur du dispositif de traitement de données est ensuite configuré pour mettre en oeuvre pour chaque région d'intérêt stockée de chacun desdits au moins un modèle de document de référence initial sélectionné une étape de détermination E4 de la région d'intérêt de l'image acquise correspondante, par projection dans l'image acquise de ladite région d'intérêt stockée en fonction de la transformation géométrique globale déterminée. Une telle projection peut être additionnée d'une certaine marge afin de pallier à l'imprécision de la transformation géométrique globale.

Pour chaque modèle de document de référence initial sélectionné, les zones de l'image acquise contenant des points d'intérêt correspondants à ceux du modèle peuvent ainsi être déterminées. La précision de cette détermination par rapport à un modèle de document donné est améliorée par la prise en compte de la transformation globale du document à analyser, particulièrement si celle-ci a été déterminée lors de l'étape de détermination de transformation E3 par rapport à l'image de référence de ce modèle de document de référence initial. Ainsi, si une transformation globale a été déterminée lors de l'étape de détermination de transformation E3 pour chaque modèle de document initial sélectionné, la transformation utilisée lors de l'étape de détermination de région d'intérêt E4 est celle correspondante au modèle de document de référence initial approprié.

Le dispositif d'analyse peut également calculer une image acquise corrigée à partir de l'image acquise du document déformé et de ladite transformation géométrique fine estimée, par exemple à des fins d'archivage, d'affichage ou d'analyse humaine. Une telle correction réalisée à partir de ladite transformation géométrique fine est ainsi plus précise qu'une correction réalisée à partir d'une transformation globale.

Un tel procédé permet ainsi d'analyser le contenu des régions à analyser dans l'image d'un document susceptible d'être déformé, à partir d'une image du document éventuellement prise à distance, sans nécessiter un défroissage mécanique ni logiciel, sans que cette identification ne soit sensible aux conditions de prise de vue de l'image du document, et sans nécessiter de calcul coûteux d'un modèle complexe de transformation reproduisant l'ensemble des déformations locales du document à analyser.

## Revendications

1. Procédé d'analyse d'un contenu d'au moins une image d'un document structuré susceptible d'être déformé (1),
ledit procédé étant mis en oeuvre par un dispositif d'analyse (4) configuré pour être relié à un dispositif de stockage (5) stockant : des modèles de document de référence associés chacun à des régions d'intérêt et des points d'intérêt compris dans lesdites régions d'intérêt, et à au moins une région à analyser, lesdits points d'intérêt d'un modèle de document de référence donné ayant un emplacement fixe dans tout document structuré selon ledit modèle de document de référence donné, chaque modèle de document de référence étant en outre associé à une image de référence d'un document selon ledit modèle,
et **caractérisé en ce qu'**il comprend des étapes de :
- acquisition (E1) de ladite au moins une image numérique dudit document ;
- sélection (E2) d'au moins un modèle de document de référence initial parmi les modèles de document de référence stockés dans le dispositif de stockage en fonction d'une zone de lecture automatique (ZLA) (MRZ, « Machine Readable Zone ») de l'image acquise ;
- pour chaque région d'intérêt stockée de chacun desdits modèles de document de référence initiaux sélectionnés :
• extraction (E5) de points d'intérêt dans l'image acquise,
• mise en correspondance (E6) des points d'intérêt extraits avec les points d'intérêt stockés de ladite région d'intérêt du modèle de document de référence initial,
- sélection (E7) d'un modèle de document de référence final parmi lesdits modèles de document de référence initiaux sélectionnés en fonction desdites mises en correspondance,
- estimation (E8) d'une transformation géométrique entre l'image acquise et l'image de référence associée au modèle de référence final, prenant en compte les déformations locales du document à l'aide de fonctions affines ou des homographies, et à partir desdites mises en correspondance,
- détermination (E9) d'au moins une région à analyser de ladite image acquise par projection de l'au moins une région à analyser du modèle de document de référence final dans ladite image acquise en fonction de ladite transformation géométrique estimée,
- analyse (E10) du contenu de ladite au moins une région à analyser de l'image acquise déterminée.

2. Procédé selon la revendication précédente dans lequel l'étape d'acquisition est réalisée à distance.

3. Procédé selon l'une des revendications précédentes dans lequel, une région à analyser du modèle de document de référence final comprenant un libellé, l'étape d'analyse (E10) du contenu de la région à analyser de l'image acquise déterminée par projection de ladite région à analyser du modèle comprend en outre une association du contenu analysé avec ledit libellé.

4. Procédé selon l'une quelconque des revendications précédentes comprenant :
- une étape de détermination (E3) d'au moins une transformation géométrique globale entre l'image acquise dudit document (1) et au moins une image de référence associée à un modèle de document de référence initial sélectionné, et
- pour chaque région d'intérêt stockée de chacun desdits modèles de document de référence initiaux sélectionnés, une étape de détermination (E4) d'une région d'intérêt de l'image acquise correspondante, par projection dans l'image acquise de ladite région d'intérêt stockée en fonction de la transformation géométrique globale déterminée,
et dans lequel l'étape d'extraction (E5) de points d'intérêt comprend l'extraction desdits points d'intérêt dans la région d'intérêt de l'image acquise déterminée.

5. Procédé selon la revendication 4, dans lequel ladite transformation géométrique globale est déterminée (E3) en fonction des zones de lecture automatique (MRZ, « Machine Readable Zone ») de l'image acquise et d'un modèle de document de référence initial.

6. Procédé selon l'une des revendications précédentes, dans lequel ladite étape de sélection du modèle de document de référence final (E7) comprend le calcul pour chaque modèle de document de référence initial d'un score de mise en correspondance en fonction des mises en correspondance réalisées pour ledit modèle de document de référence initial, et la sélection comme modèle de document de référence final du modèle de document de référence initial présentant le score de mise en correspondance maximum.

7. Procédé selon l'une des revendications précédentes, dans lequel ledit document est parmi un document d'identité, une facture, un justificatif, un formulaire.

8. Procédé selon l'une des revendications précédentes, dans lequel la transformation géométrique entre l'image acquise et l'image de référence associée au modèle de référence final est estimée (E8) à l'aide d'un algorithme de pondération par distance inverse ou d'interpolation par splines.

9. Procédé selon l'une des revendications précédentes, comprenant en outre le calcul d'une image acquise corrigée à partir de l'image acquise du document déformé et de ladite transformation géométrique entre l'image acquise et l'image de référence associée au modèle de référence final.

10. Procédé selon l'une des revendications précédentes, dans lequel au moins une région à analyser de l'image acquise comprenant une chaîne de caractères est lue (E10) par un procédé de reconnaissance optique de caractères (« OCR », « optical character recognition »).

11. Produit programme d'ordinateur comprenant des instructions de code pour l'exécution d'un procédé d'analyse selon l'une quelconque des revendications précédentes lorsque ce programme est exécuté par un processeur.

12. Dispositif d'analyse (4) d'un contenu d'au moins une image d'un document structuré susceptible d'être déformé (1),
**caractérisé en ce qu'**il comprend un dispositif de traitement de données (2) configuré pour être relié à un dispositif de stockage (5) stockant : des modèles de document de référence associés chacun à des régions d'intérêt et des points d'intérêt compris dans lesdites régions d'intérêt, et à au moins une région à analyser, lesdits points d'intérêt d'un modèle de document de référence donné ayant un emplacement fixe dans tout document structuré selon ledit modèle de document de référence donné, chaque modèle de document de référence étant en outre associé à une image de référence d'un document selon ledit modèle,
et **caractérisé en ce qu'**il comprend en outre un dispositif de capture de ladite au moins une image numérique dudit document (3) et **en ce que** le dispositif de traitement de données (2) est configuré pour :
- sélectionner au moins un modèle de document de référence initial parmi les modèles de document de référence stockés dans le dispositif de stockage en fonction d'une zone de lecture automatique (ZLA) (MRZ, « Machine Readable Zone ») de l'image acquise ;
- pour chaque région d'intérêt stockée de chacun desdits modèles de document de référence initiaux sélectionnés :
• extraire des points d'intérêt dans l'image acquise,
• mettre en correspondance des points d'intérêt extraits avec les points d'intérêt stockés de ladite région d'intérêt du modèle de document de référence initial,
- sélectionner un modèle de document de référence final parmi les modèles de document de référence initiaux sélectionnés en fonction desdites mises en correspondance,
- estimer une transformation géométrique entre l'image acquise et l'image de référence associée au modèle de référence final prenant en compte les déformations locales du document à l'aide de fonctions affines ou des homographies, et à partir desdites mises en correspondance,
- déterminer au moins une région à analyser de ladite image acquise par projection de l'au moins une région à analyser du modèle de document de référence final dans ladite image acquise en fonction de ladite transformation géométrique estimée,
- analyser le contenu de ladite au moins une région à analyser de l'image acquise déterminée.

13. Système d'analyse (6) d'un contenu d'au moins une image d'un document structuré susceptible d'être déformé (1) comprenant :
- un dispositif de stockage (5) stockant : des modèles de document de référence associés chacun à des régions d'intérêt et des points d'intérêt compris dans lesdites régions d'intérêt, et à au moins une région à analyser, lesdits points d'intérêt d'un modèle de document de référence donné ayant un emplacement fixe dans tout document structuré selon ledit modèle de document de référence donné,
- le dispositif d'analyse (4) selon la revendication précédente configuré pour être relié audit dispositif de stockage (5).

14. Dispositif de prise de vue à distance (7bis) comprenant un système d'analyse (4) selon la revendication précédente.

15. Terminal mobile (7) comprenant un dispositif de prise de vue à distance selon la revendication précédente.

## Patentansprüche

1. Verfahren zur Analyse eines Inhalts mindestens eines Bilds eines möglicherweise verformten strukturierten Dokuments (1),
wobei das Verfahren von einer Analysevorrichtung (4) durchgeführt wird, die konfiguriert ist, mit einer Speichervorrichtung (5) verbunden zu werden, die speichert: Bezugsdokumentmodelle, die je interessierenden Bereichen und in den interessierenden Bereichen enthaltenen interessierenden Punkten und mindestens einem zu analysierenden Bereich zugeordnet sind, wobei die interessierenden Punkte eines gegebenen Bezugsdokumentmodells in jedem gemäß dem gegebenen Bezugsdokumentmodell strukturierten Dokument einen festen Standort haben, wobei jedes Bezugsdokumentmodell außerdem einem Bezugsbild eines Dokuments gemäß dem Modell zugeordnet ist,
und **dadurch gekennzeichnet ist, dass** es die folgenden Schritte enthält:
- Erfassung (E1) des mindestens einen digitalen Bilds des Dokuments;
- Auswahl (E2) mindestens eines ursprünglichen Bezugsdokumentmodells unter den in der Speichervorrichtung gespeicherten Bezugsdokumentmodellen abhängig von einer automatischen Lesezone (ZLA) (MRZ, «Machine Readable Zone») des erfassten Bilds;
- für jeden gespeicherten interessierenden Bereich jedes der ausgewählten ursprünglichen Bezugsdokumentmodelle:
• Entnahme (ES) interessierender Punkte aus dem erfassten Bild,
• Abgleich (E6) der entnommenen interessierenden Punkte mit den gespeicherten interessierenden Punkten des interessierenden Bereichs des ursprünglichen Bezugsdokumentmodells,
- Auswahl (E7) eines endgültigen Bezugsdokumentmodells unter den ausgewählten ursprünglichen Bezugsdokumentmodellen abhängig von den Abgleichen,
- Schätzung (E8) einer geometrischen Umwandlung zwischen dem erfassten Bild und dem dem endgültigen Bezugsmodell zugeordneten Bezugsbild, unter Berücksichtigung der lokalen Verformungen des Dokuments mit Hilfe von affinen Funktionen oder Homographien, und ausgehend von den Abgleichen,
- Bestimmung (E9) mindestens eines zu analysierenden Bereichs des erfassten Bilds durch Projektion des mindestens einen zu analysierenden Bereichs des endgültigen Bezugsdokumentmodells in das erfasste Bild abhängig von der geschätzten geometrischen Umwandlung,
- Analyse (E10) des Inhalts des mindestens einen zu analysierenden Bereichs des bestimmten erfassten Bilds.

2. Verfahren nach dem vorhergehenden Anspruch, wobei der Erfassungsschritt aus der Ferne durchgeführt wird.

3. Verfahren nach einem der vorhergehenden Ansprüche, wobei, wenn ein zu analysierender Bereich des endgültigen Bezugsdokumentmodells einen Text enthält, der Schritt der Analyse (E10) des Inhalts des zu analysierenden Bereichs des bestimmten erfassten Bilds durch Projektion des zu analysierenden Bereichs des Modells außerdem eine Zuordnung des analysierten Inhalts zum Text enthält.

4. Verfahren nach einem der vorhergehenden Ansprüche, das enthält:
- einen Schritt der Bestimmung (E3) mindestens einer globalen geometrischen Umwandlung zwischen dem erfassten Bild des Dokuments (1) und mindestens einem einem ausgewählten ursprünglichen Bezugsdokumentmodell zugeordneten Bezugsbild, und
- für jeden gespeicherten interessierenden Bereich jedes der ausgewählten ursprünglichen Bezugsdokumentmodelle, einen Schritt der Bestimmung (E4) eines interessierenden Bereichs des entsprechenden erfassten Bilds durch Projektion des gespeicherten interessierenden Bereichs in das erfasste Bild abhängig von der bestimmten globalen geometrischen Umwandlung,
und wobei der Schritt der Entnahme (ES) von interessierenden Punkte die Entnahme der interessierenden Punkte aus dem interessierenden Bereich des bestimmten erfassten Bilds enthält.

5. Verfahren nach Anspruch 4, wobei die globale geometrische Umwandlung abhängig von den automatischen Lesezonen (MRZ, «Machine Readable Zone») des erfassten Bilds und von einem globalen ursprünglichen Bezugsdokumentmodell bestimmt wird (E3).

6. Verfahren nach einem der vorhergehenden Ansprüche, wobei der Schritt der Auswahl des endgültigen Bezugsdokumentmodells (E7) die Berechnung für jedes ursprüngliche Bezugsdokumentmodell eines Abgleich-Scores abhängig von den für das ursprüngliche Bezugsdokumentmodell durchgeführten Abgleichen und die Auswahl des den maximalen Abgleich-Score aufweisenden ursprünglichen Bezugsdokumentmodells als endgültiges Bezugsdokumentmodell enthält.

7. Verfahren nach einem der vorhergehenden Ansprüche, wobei das Dokument sich unter einem Ausweisdokument, einer Rechnung, einem Beleg, einem Formular befindet.

8. Verfahren nach einem der vorhergehenden Ansprüche, wobei die geometrische Umwandlung zwischen dem erfassten Bild und dem dem endgültigen Bezugsmodell zugeordneten Bezugsbild mit Hilfe eines Algorithmus einer inversen Distanzwichtung oder einer Spline-Interpolation geschätzt wird (E8).

9. Verfahren nach einem der vorhergehenden Ansprüche, das außerdem die Berechnung eines korrigierten erfassten Bilds ausgehend von dem erfassten Bild des verformten Dokuments und von der geometrischen Umwandlung zwischen dem erfassten Bild und dem dem endgültigen Bezugsmodell zugeordneten Bezugsbild enthält.

10. Verfahren nach einem der vorhergehenden Ansprüche, wobei mindestens ein zu analysierender Bereich des erfassten Bilds, der eine Zeichenkette enthält, von einem optischen Erkennungsverfahren von Zeichen («OCR», «optical character recognition») gelesen wird (E10).

11. Computerprogrammprodukt, das Codeanweisungen zur Ausführung eines Analyseverfahrens nach einem der vorhergehenden Ansprüche enthält, wenn dieses Programm von einem Prozessor ausgeführt wird.

12. Analysevorrichtung (4) eines Inhalts mindestens eines Bilds eines möglicherweise verformten strukturierten Dokuments (1), **dadurch gekennzeichnet, dass** sie eine Datenverarbeitungsvorrichtung (2) enthält, die konfiguriert ist, mit einer Speichervorrichtung (5) verbunden zu werden, die speichert: Bezugsdokumentmodelle, die je interessierenden Bereichen und in den interessierenden Bereichen enthaltenen interessierenden Punkten und mindestens einem zu analysierenden Bereich zugeordnet sind, wobei die interessierenden Punkte eines gegebenen Bezugsdokumentmodells in jedem gemäß dem gegebenen Bezugsdokumentmodell strukturierten Dokument einen festen Standort haben, wobei jedes Bezugsdokumentmodell außerdem einem Bezugsbild eines Dokuments gemäß dem Modell zugeordnet ist,
und **dadurch gekennzeichnet, dass** sie außerdem eine Aufnahmevorrichtung des mindestens einen digitalen Bilds des Dokuments (3) enthält, und dass die Datenverarbeitungsvorrichtung (2) konfiguriert ist, um:
- mindestens ein ursprüngliches Bezugsdokumentmodell unter den in der Speichervorrichtung gespeicherten Bezugsdokumentmodellen abhängig von einer automatischen Lesezone (ZLA) (MRZ, «Machine Readable Zone») des erfassten Bilds auszuwählen;
- für jeden gespeicherten interessierenden Bereich jedes der ausgewählten ursprünglichen Bezugsdokumentmodelle:
• interessierende Punkte aus dem erfassten Bild zu entnehmen,
• entnommene interessierende Punkte mit den gespeicherten interessierenden Punkten des interessierenden Bereichs des ursprünglichen Bezugsdokumentmodells abzugleichen,
- ein endgültiges Bezugsdokumentmodell unter den ausgewählten ursprünglichen Bezugsdokumentmodellen abhängig von den Abgleichen auszuwählen,
- eine geometrische Umwandlung zwischen dem erfassten Bild und dem dem endgültigen Bezugsmodell zugeordneten Bezugsbild unter Berücksichtigung der lokalen Verformungen des Dokuments mit Hilfe von affinen Funktionen oder Homographien und ausgehend von den Abgleichen zu schätzen,
- mindestens einen zu analysierenden Bereich des erfassten Bilds durch Projektion des mindestens einen zu analysierenden Bereichs des endgültigen Bezugsdokumentmodells in das erfasste Bild abhängig von der geschätzten geometrischen Umwandlung zu bestimmen,
- den Inhalt des mindestens einen zu analysierenden Bereichs des bestimmten erfassten Bilds zu analysieren.

13. Analysesystem (6) eines Inhalts mindestens eines Bilds eines möglicherweise verformten strukturierten Dokuments (1), das enthält:
- eine Speichervorrichtung (5), die speichert: Bezugsdokumentmodelle, die je interessierenden Bereichen und in den interessierenden Bereichen enthaltenen interessierenden Punkten und mindestens einem zu analysierenden Bereich zugeordnet sind, wobei die interessierenden Punkte eines gegebenen Bezugsdokumentmodells in jedem gemäß dem gegebenen Bezugsdokumentmodell strukturierten Dokument einen festen Standort haben,
- die Analysevorrichtung (4) nach dem vorhergehenden Anspruch, die konfiguriert ist, mit der Speichervorrichtung (5) verbunden zu werden.

14. Fernaufnahmevorrichtung (7bis), die ein Analysesystem (4) nach dem vorhergehenden Anspruch enthält.

15. Mobiles Endgerät (7), das eine Fernaufnahmevorrichtung nach dem vorhergehenden Anspruch enthält.

## Claims

1. Method for analysing content of at least one image of a structured document which may be deformed (1),
said method being implemented by an analysis device (4) configured to be connected to a storage device (5) storing: reference document templates each associated with regions of interest and points of interest contained within said regions of interest, and with at least one region to be analysed, said points of interest of a given reference document template having a fixed location in any document structured according to said given reference document template, each reference document template being further associated with a reference image of a document according to said template,
and **characterized in that** it comprises steps of:
- acquiring (E1) said at least one digital image of said document;
- selecting (E2) at least one initial reference document template from the reference document templates stored in the storage device according to a machine-readable zone (MRZ) of the acquired image;
- for each stored region of interest of each of said selected initial reference document templates:
• extracting (E5) points of interest from the acquired image,
• matching (E6) the extracted points of interest with the stored points of interest of said region of interest of the initial reference document template,
- selecting (E7) a final reference document template from said selected initial reference document templates, based on said matches,
- estimating (E8) a geometric transformation between the acquired image and the reference image associated with the final reference template, taking into account the local deformations of the document by means of affine functions or homographies, and based on said matches,
- determining (E9) at least one region to be analysed of said acquired image by projecting the at least one region to be analysed of the final reference document template into said acquired image as a function of said estimated geometric transformation,
- analysing (E10) the content of said at least one region to be analysed of the determined acquired image.

2. Method according to the preceding claim in which the acquisition step is carried out remotely.

3. Method according to one of the preceding claims in which, a region to be analysed of the final reference document template comprising a heading, the step of analysing (E10) the content of the region to be analysed of the determined acquired image by projecting said region to be analysed of the template further comprises associating the analysed content with said heading.

4. Method according to any one of the preceding claims, comprising:
- a step of determining (E3) at least one global geometric transformation between the acquired image of said document (1) and at least one reference image associated with a selected initial reference document template, and
- for each stored region of interest of each of said selected initial reference document templates, a step of determining (E4) a region of interest of the corresponding acquired image, by projecting said stored region of interest into the acquired image as a function of the determined global geometric transformation,
and in which the step of extracting (E5) points of interest comprises extracting said points of interest from the region of interest of the determined acquired image.

5. Method according to Claim 4, in which said global geometric transformation is determined (E3) as a function of the MRZs (machine-readable zones) of the acquired image and an initial reference document template.

6. Method according to one of the preceding claims, in which said step of selecting the final reference document template (E7) comprises calculating, for each initial reference document template, a match score depending on the matches made for said initial reference document template, and selecting, as the final reference document template, the initial reference document template that has the maximum match score.

7. Method according to one of the preceding claims, in which said document is an identity document, an invoice, written proof or a form.

8. Method according to one of the preceding claims, in which the geometric transformation between the acquired image and the reference image associated with the final reference template is estimated (E8) by means of an inverse distance weighting or spline interpolation algorithm.

9. Method according to one of the preceding claims, further comprising calculating a corrected acquired image from the acquired image of the deformed document and said geometric transformation between the acquired image and the reference image associated with the final reference template.

10. Method according to one of the preceding claims, in which at least one region to be analysed of the acquired image comprising a string of characters is read (E10) by an optical character recognition (OCR) method.

11. Computer program product comprising code instructions for executing an analysis method according to any one of the preceding claims when this program is executed by a processor.

12. Device (4) for analysing content of at least one image of a structured document which may be deformed (1), **characterized in that** it comprises a data processing device (2) configured to be connected to a storage device (5) storing: reference document templates each associated with regions of interest and points of interest contained within said regions of interest, and with at least one region to be analysed, said points of interest of a given reference document template having a fixed location in any document structured according to said given reference document template, each reference document template being further associated with a reference image of a document according to said template,
and **characterized in that** it further comprises a device for capturing said at least one digital image of said document (3) and **in that** the data processing device (2) is configured to:
- select at least one initial reference document template from the reference document templates stored in the storage device according to a machine-readable zone (MRZ) of the acquired image;
- for each stored region of interest of each of said selected initial reference document templates:
• extract points of interest from the acquired image,
• match the extracted points of interest with the stored points of interest of said region of interest of the initial reference document template,
- select a final reference document template from the selected initial reference document templates, based on said matches,
- estimate a geometric transformation between the acquired image and the reference image associated with the final reference template, taking into account the local deformations of the document by means of affine functions or homographies, and based on said matches,
- determine at least one region to be analysed of said acquired image by projecting the at least one region to be analysed of the final reference document template into said acquired image as a function of said estimated geometric transformation,
- analyse the content of said at least one region to be analysed of the determined acquired image.

13. System (6) for analysing content of at least one image of a structured document which may be deformed (1), comprising:
- a storage device (5) storing: reference document templates each associated with regions of interest and points of interest contained within said regions of interest, and with at least one region to be analysed, said points of interest of a given reference document template having a fixed location in any document structured according to said given reference document template,
- the analysis device (4) according to the preceding claim configured to be connected to said storage device (5) .

14. Remote image shooting device (7bis) comprising an analysis system (4) according to the preceding claim.

15. Mobile terminal (7) comprising a remote image shooting device according to the preceding claim.
